# EUROPEAN PATENT APPLICATION

(11) **EP 3 892 491 A1**
(43) Date of publication of application: **13.10.2021**
(21) Application number: 20168302.6
(22) Date of filing: 06.04.2020
(51) Int. Cl.: B60L 1/00, B60R 16/023, B60R 16/03, B60R 21/01

(54) **A VEHICLE INCLUDING A DATA GENERATOR MESH**

(71) Applicant: CNH Industrial Belgium N.V., 8210 Zedelgem (BE)
(72) Inventor: Carpentier, Michael, 8490 Varsenare (BE)
(74) Representative: CNH Industrial IP Department

(57) **Abstract**

A vehicle (10) includes a wireless data mesh (21) and comprises at least one vehicle frame (22) having distributed at spaced locations on it a plurality of data generators (23, 24, 26, 27, 28, 29, 31, 32) that are wirelessly connected to define the wireless data generator mesh (21), wherein at least one said data generator is a locally powered data generator that is operatively connected to at least one energy harvester (23', 24', 26', 27', 28', 29', 31') that develops power for operation of the sensor.

## Description

### Background of the Invention

The invention relates to a vehicle including a data generator mesh.

The term *"vehicle"* as used herein may be construed broadly and non-limitingly to encompass a wide range of on- and off-road vehicles that include ground-engaging, driven or passive members such as wheels or tracks; rail vehicles; ships, boats and submersible vehicles; elevators; and mobile conveyors. Such vehicles may be autonomous in the sense of not requiring human drivers or operators or they may be such as to include controls that are operated by humans. Such controls can in some examples to which the invention pertains be operated remotely.

Vehicles as referred to herein may include their own sources of energy and/or motive power or they may draw energy from external sources (as is the case for many rail vehicles and trams, for instance, that draw electrical power from overhead wires). The term *"vehicle"* embraces within its scope single vehicles, multi-vehicle trains or the individual elements of multi-vehicle trains, even if on their own such elements are not capable of locomotion without the coupling to them of one or more further train elements. *"Coupling"* in this context includes physical connecting together of vehicles, as happens when one vehicle tows another; and it also includes e.g. wireless communications coupling as may occur for instance when a group of agricultural vehicles operates in a field in a manner copying or mimicking the operation of a lead vehicle. Such a lead vehicle may itself be autonomous, or it may require operation by a human; and it may be self-powered or may draw power from an external source.

Many vehicles produced during the 20^{th} Century have included motive power sources in the form of internal combustion engines such as diesel or petrol engines; and earlier vehicles, especially 19^{th} Century railway vehicles and so-called *"traction engines"*, commonly included steam engines that in a broadly similar manner to internal combustion engines rely on the combustion of hydrocarbons. In more recent times other sources of vehicle power have been growing in prominence and include hydrogen-based power sources such as fuel cell drive trains; and electric motors powered by batteries. The fuel cells or batteries typically are carried by the vehicles but they also can be supported on nearby auxiliary vehicles.

The invention is applicable to all such vehicles as outlined above and is particularly useful in agricultural, construction and road transport vehicles such as (but not limited to) combine harvesters, beet harvesters, fruit harvesters, forage harvesters, tractors, mowing equipment, autonomous baling machines, loaders, multipurpose farm vehicles, excavators, bulldozers, dump trucks, cranes, rollers, planers, concrete mixers, tankers and trucks. The invention is herein exemplified with reference to components of a combine harvester, but this is not to be understood as limiting the invention.

Nowadays it is commonplace for vehicles to include large numbers of data generators. In vehicles intended for locomotion over the ground (either on roads or in off-road situations) such data generators may include a wide variety of sensors. When considered at a general level these can be responsible for indicating for example the location, direction, inclination or speed of the vehicle; the settings of various operational parameters such as transmission ratios, steering angles, throttle settings, or brake system statuses; the level of fuel in a fuel tank; the level of an auxiliary fluid such as brake or clutch fluid or *"screen wash"*; the charge status of a battery; the operational statuses of vehicle sub-systems; or the proximity of the vehicle to an object, a class of objects or a particular location. Examples of such objects in the agricultural context include but are not limited to farm yards, grain stores, weighing stations, refuelling depots, charging stations, grain wagons or trailers and conveyors or elevators.

Modern vehicles also frequently have other types of data generators, including vehicle guidance systems, processors, data transmitters, data receivers, data transceivers, antennae, memory devices, cameras, visual indicators, audio indicators, mimics, warning lamps and sounders, printers and displays.

All such data generators as exemplified above require power in order to operate, which operation may include the creation, transmission, emission, receiving, storing, processing, displaying and printing of information, values, graphics, lights, sounds and images.

In many vehicles such power is provided by way of a wiring harness or another arrangement of wires that electrically interconnect various data generators, the systems and sub-systems of the vehicle, antennae, memory devices and various processing devices that typically are present in multiple numbers in vehicles.

As explained in EP 2964009 A such wiring harnesses are associated with disadvantages. The primary drawback of wiring harnesses identified in EP 2964009 A is that in even moderately complex vehicles such as grass-cutting machinery it is difficult to route the branches of a wiring harness so that they successfully can connect together the various electronic or electrically powered data generators of the vehicle without interfering with, or being affected by interference from, other sub-systems.

This is an especially acute problem in agricultural, construction and road transport vehicles. Such vehicles are large and have extensive, complicated data generator connection requirements. Vehicles such as those listed often are required to operate in unforgiving environments that tend to damage wiring harnesses. In many instances the wiring harnesses have to be placed deep inside the vehicles, in the vicinity of rapidly moving and/or powerful parts that may damage the harnesses if for example a malfunction occurs or the harness becomes detached from a fixing.

Moreover in the case of many types of crop harvesting or crop handling machines the wiring harnesses extend through or pass close to crop flow paths. Generally the crop is impelled to move at high speed in the crop flow paths. The high levels of energy imparted to crop particles in combination with an often abrasive exterior means that wiring harnesses passing through or near a crop flow path are prone to damage.

Even away from the crop paths the interior locations of e.g. a combine harvester and several other agricultural and construction vehicles are particularly hostile, being associated with high levels of electrical and acoustic noise; vibration; dust; abrasion; high temperatures; moisture; and the movement of powerful components such as threshers, separators and beaters. It is difficult to design wiring harnesses for use in such conditions; and when the harnesses fail it can be an especially difficult and time-consuming task to locate a fault and repair or replace part or all of the harness.

Furthermore the main component of a wiring harness is electrically transmissive wiring, that usually is made from copper. This is an expensive and dense metal. The inclusion of a large wiring harness in a vehicle such as a combine harvester undesirably increases both the cost and the mass of the vehicle, with concomitant adverse impacts on the vehicle purchase price and fuel economy.

The invention relates to all types of vehicles as described, outlined or exemplified herein and seeks to ameliorate one or more problems of the prior art. Disclosures of embodiments and aspects herein may be understood to be disclosures of the features of such embodiments or aspects individually, in combination with one another or in combination with the vehicle types as mentioned herein; or in combination with other vehicle types than those described.

### Summary of the Invention

In embodiments disclosed herein a vehicle includes a wireless data mesh and comprises at least one vehicle frame having distributed at spaced locations on it a plurality of data generators that are wirelessly connected to define the wireless data generator mesh, wherein at least one said data generator is a locally powered data generator that is operatively connected to at least one energy harvester that develops power for operation of the data generator.

Wireless data meshes are known *per se.* Examples are described in Hashemi et al "Intra-car Wireless Sensors Data Collection: A Multi-hop Approach", Proc. IEEE 77th VTC Spring, pp. 1-5, 2013 available at https://pdfs.semanticscholar.org/32ef/bfc735ecf9913285e7126a9ce20907024d04.pdf.

Hashemi *et al* compare so-called *"single-hop"* and *"multi-hop"* data communication approaches.

Single-hop architecture involves the designation of a single central node for data aggregation, and the designation of further nodes (i.e. individual sensors or other data generators) that are remote from the central node and connected to it via a wireless *"star"* topology in which the further nodes exchange data directly with the central node.

Multi-hop data aggregation involves the dynamic designation of self-declared root nodes. Data moves around the wireless topology in a series of *"hops".*

The content of *"Intra-car Wireless Sensors Data Collection: A Multi-hop Approach"* is non-limitingly incorporated herein by reference. Other forms of data mesh are known and represent at least potentially viable ways of embodying the invention.

*"Vehicle frame"* as used herein is to be interpreted broadly, and relates to any frame, chassis, bodyshell, cab or similar structure that forms a mounting for data generators, processors, engines, motors, transmissions, steering systems, components, ancillaries and/or sub-systems of any vehicle to which the invention pertains.

The invention advantageously combines a wireless data mesh with local powering of data generators by way of one or more energy harvesters. The term *"energy harvester"* embraces numerous embodiments within its scope and also should be construed broadly. Energy harvesters include but are not limited to power sources that may generate power and in some cases store power through the conversion of e.g. mechanical, acoustic, thermal, chemical, electrochemical or biological processes to energy, especially electrical energy as is most suited for powering the data generators contemplated herein. Non-limiting examples of energy harvesters are described herein.

The vehicle of embodiments described herein is particularly suitable for use as a large, complex vehicle such as an agricultural, construction or road transport vehicle as mentioned. Use of a wireless data mesh in combination with one or more data generators that are powered by one or more energy harvesters beneficially addresses various problems of prior art vehicle data networks. In addition a data mesh as described herein is scalable, thereby leading to beneficial modularity and the ability to upgrade pre-existing data collection and processing systems over time.

In embodiments preferably the at least one locally powered data generator is operatively connected to the at least one energy harvester using a short-range radio frequency (RF) communication or connection protocol. Such a connection or connection protocol includes but is not limited to a connection or connection protocol selected from the list including Bluetooth, Zigbee, Z-Wave, Near Field Communication (NFC), Sigfox, Neul or LoRaWAN. These wireless connection methods are known to the person of skill in the art.

Preferably the vehicle includes a plurality of energy harvesters that correspond in number to the plurality of locally powered data generators. Such correspondence may be a "one-to-one"correspondence in which an individual energy harvester is provided for each data generator; or a different ratio of data generators to energy harvesters may apply. In the latter case energy harvesters may be provided that are capable of powering multiple data generators.

It also is possible for different correspondence ratios to apply at different locations in the wireless data mesh. Thus it is possible for e.g. safety-critical parts of the data mesh (such as those relating to braking performance) to have a higher number of energy harvesters per data generator than less critical parts of the mesh relating to an ancillary sub-system such as a heater or navigation system.

In an embodiment the mesh is provided in a star protocol arrangement. In an alternative embodiment the mesh is provided as a multi-hop node network. Other network node protocols are possible in the data mesh of embodiments described herein.

In embodiments disclosed herein preferably the nodes of the multi-hop node network when this is present are self-declaring root nodes. This term is explained herein and also is familiar to the person of skill in the art.

When present the self-declaring root nodes preferably are temporary root nodes. This permits the re-designation of individual nodes from time to time either as root nodes or not as root nodes, depending on the instantaneously prevailing requirement.

Conveniently the vehicle of embodiments described herein is configured as an agricultural, construction or road transport vehicle. When it is configured as an agricultural vehicle conveniently and non-limitingly at least one data generator is selected from the list including a crop moisture sensor, a crop mass sensor, a header bar setting sensor, a vehicle speed sensor, a vehicle direction sensor, a vehicle transmission ratio sensor, a vehicle throttle setting sensor, a vehicle brake system status sensor, an engine or motor fault sensor, a fuel level sensor, a battery charge sensor, a vehicle auxiliary fluid level sensor, a vehicle exhaust analysis sensor, an inclinometer, a vehicle position sensor, a vehicle sub-system status sensor, a proximity sensor, a vehicle guidance system, a processor, a data transmitter, a data receiver, a data transceiver, a memory device, a visual indicator, an audio indicator, a printer, a plotter, a mimic, a camera or a display.

### Brief Description of the Drawings

There now follows a description of embodiments, by way of non-limiting example, with reference being made to the accompanying drawings in which:
Figure 1 is a schematic plan view, from above, of a combine harvester including a wireless data mesh provided in accordance with a star protocol arrangement; and
Figure 2 is a schematic plan view, from above, of a combine harvester including a wireless data mesh provided as a multi-hop node network.

### Detailed Description of the Drawings

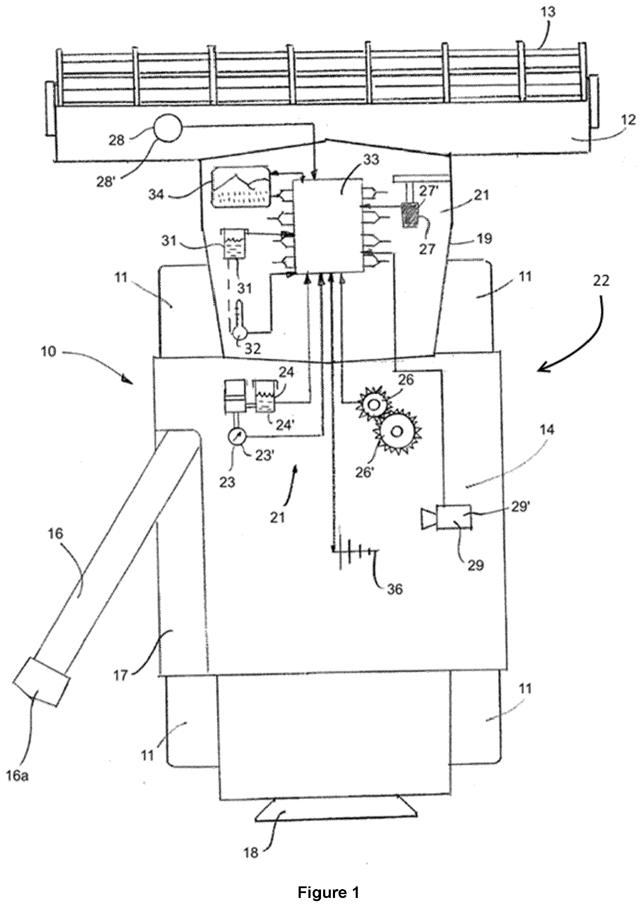

Figure 1 shows in schematic plan view from above a vehicle that in the illustrated embodiment is a combine harvester 10. The illustration of a combine harvester is exemplary and is not intended to limit the invention as disclosed herein. Thus it is possible for the vehicle to be of any of the types identified herein; or indeed of further types as will occur to the person of skill in the art.

Combine harvester 10 is capable of powered movement over the surface of a field for the purpose of harvesting crop matter growing in the field. To this end the combine harvester 10 includes four ground-engaging wheels, fitted with air-inflated tyres, that are secured on a vehicle frame indicated generally by numeral 22. The wheels are not visible in Figure 1 since they lie under body parts of the combine harvester 10 such as the four mudguards 11 visible in the figure.

The ground-engaging wheels are connected to a drive train that in turn is connected via a transmission and drive shafts to the rotary output of a powerful engine such as a diesel engine. At least two of the ground-engaging wheels are driven by such means to rotate; and at least two of the wheels are steerable in order to provide directional control of the combine harvester 10.

At its in-use forward end the combine harvester 10 includes a front, transversely extending header bar 12 and reel 13. These parts operate in a *per se* known manner as the combine harvester 10 moves along a row of crop plants in a field, with the reel and header bar straddling the crop row, to cut the crop plants and cause ingestion of the major part of each of them into the interior of the combine harvester 10.

Inside the combine harvester 10 the crop plants are separated according to known techniques into grain, straw and tailings. The grain is cleaned inside the combine harvester 10 and transferred to a large, cuboidal grain tank 14. Once the grain tank 14 is full to a desired level the cleaned grains are discharged via a grain discharge 16 into an open-topped grain wagon or trailer that is not shown in the drawings but may be of a conventional kind.

The grain trailer typically is towed behind a tractor that runs alongside the combine harvester 10 while it is harvesting crop. The grain is discharged into the trailer along a grain discharge tube or chute 16 that includes a downwardly directed opening at its in-use free end 16a.

The discharge tube 16 is a hollow tube communicating with the grain tank 14, inside which one or more conveyance mechanisms are used to drive the grain out of the grain tank 14 along the discharge tube 16 when desired

The discharge tube 16 normally is stowed in a recess 17 extending longitudinally along the top of the grain tank 14 until it is required to empty grain from the grain tank 14. At this point the discharge tube 16 is swung horizontally outwardly from the recess 17 to protrude externally as illustrated from the combine harvester 10 and overlie the adjacent grain trailer. Discharged grains then fall from the free end 16a of the discharge tube 16 into the trailer. Typically a motor is used to effect rotational deployment of the grain discharge tube 16 and its stowing back in the recess 17 once discharging of grains has occurred.

This manner of emptying the grain tank 14 avoids interruption of harvesting operations. Aside from the general benefit this provides in terms of the efficiency of the harvesting activity, this ensures that the ingestion of crop parts into the combine harvester 10 takes place as consistently as possible because the combine harvester 10 does not need to slow down or stop while grain discharging occurs. This in turn is beneficial in terms of the operation of the combine harvester 10.

Straw separated from the grains inside the combine harvester 10 is discharged via a straw discharge 18 at the rear of the combine harvester 10 as harvesting operations take place. The straw is left in swaths or windrows in the field for later collection by a baling machine that bales the straw into commercially useful bales.

Typically a combine harvester 10 includes an operator's cab 19 inside which an operator sits in order to effect control of the combine harvester 10 and monitor the harvesting process. Some combine harvesters 10 however do not require the presence of an operator and instead move autonomously under the control of one or more processors programmed with software intended to provide for efficient harvesting activity. Such combine harvesters 10 may or may not include a recognisable operator's cab 19.

The roof 21 of the cab 19 is visible in Figure 1. The side walls of the cab 19, that are obscured by the overlying roof 21 in Figure 1, typically include a large glazed area via which a human operator may gain as good a view as possible of the conditions in the field in which the combine harvester 10 operates. However it also increasingly is the case that machine vision systems, such as digital cameras, image-generating sensors or similar sub-systems, are employed in order to obtain information on the conditions internal and external to the combine harvester 10. Such sub-systems are of particular use in providing images that cannot readily be seen from the operator's cab 19.

A modern combine harvester 10 in addition to the components described includes many further sub-systems that are not visible in Figure 1. These include (but are not limited to) fuelling, transmission, braking and navigation systems; external parts such as motor systems for setting the header bar 12 and reel 13; internal parts, such as the threshing and grain cleaning mechanisms, that perform the tasks of separating the crop plant parts and cleaning the grain; sub-systems that assess the grain in terms of (for example) its mass, moisture content, average grain size, cleanliness and quality; image-generating sub-systems that as mentioned can produce images of conditions outside the combine harvester 10 and further imaging sub-systems that can produce images of e.g. grain inside the harvesting machine 10; inclinometers, guidance systems, accelerometers, position sensors, proximity sensors, fuel level sensors, battery charge sensors, engine/motor fault sensors, and various logging systems for logging information about the harvested crops and as desired associating such data with e.g. yield maps indicating the fertility of parts of a particular field.

Most if not all these sub-systems include sensors and other devices that generate signals indicative of operational statuses, settings, information about crops, crop parts and field yields; images; image data and so on. Broadly such sensors and other devices are referred to herein as data generators.

The outputs of the data generators in a great many cases are electrical signals that are indicative of data values intended to be sensed, calculated or otherwise determined by the data generators. There is a general requirement for such signals to be transmitted both within and in many cases externally of the combine harvester 10.

However other data generator output types also are possible. These include but are not limited to acoustic, magnetic and optical signals. There is a requirement for such signals also to be transmitted within and externally of the combine harvester.

Numerous other vehicle types as exemplified herein also include data generators. They may differ, in terms of their purposes, locations and numbers, from those present in a combine harvester; but in broad terms one may regard the data generation and transmission requirement to be similar in many different vehicle types. All such variants are within the scope of the invention.

As noted there are disadvantages to effecting transmission of data as aforesaid using a wired harness. For this reason the combine harvester 10 includes a wireless data mesh represented generally by numeral 21.

In Figure 1 the wireless data mesh includes a series of sensors or other data generators 23, 24, 26, 27, 28, 29, 31 and 32 that are connected in a star protocol arrangement to a processor 33 that also is an element in the wireless data mesh. A further element in the wireless data mesh is a display 34 that provides the operator in the cab with images and information pertaining to aspects of operation of the combine harvester 10. Yet a further element is a transmitter represented by schematic aerial 36 visible on the roof of the cab 19 of the combine harvester 10.

The number of sensors 23, 24, 26, 27, 28, 29, 31 and 32 illustrated in Figure 1 and their types and functions are purely illustrative. Other numbers, types and patterns of sensors and other data generators are possible within the scope of the invention.

Sensor 23 as illustrated is a brake system health sensor. This may be embodied as e.g. a brake fluid pressure sensor that produces signals, such as electrical signals, indicative of the pressure of fluid in a hydraulic braking system of the combine harvester.

Sensor 24 may be e.g. a brake fluid level sensor. Such a sensor is well known in automotive engineering and does not require describing in detail herein.

Sensor 26 is a transmission ratio selection sensor that generates a signal indicative of the transmission ratio selected by the operator of the combine harvester 10; and sensor 27 is a throttle setting sensor that generates signals indicative of the throttle or engine governor setting.

Sensor 28 may generate signals indicative of the height of the header bar 11 and sensor 29 may be e.g. a camera inside the combine harvester 10 that generates images of crop as it passes to the clean grain tank 14.

Sensors 31 and 32 may be arranged to sense non-critical aspects of operation of the combine harvester 10, such as the level of screen wash in a screen wash reservoir and the temperature of air passed to the interior of the cab 19 by a heater.

Each of the sensors or other data generators 23, 24, 26, 27, 28, 29, 31 and 32 includes a wireless transmitter and, in at least some cases, a wireless receiver. These permit the e.g. radio frequency wireless transmission and receipt in the data mesh of signals output by the data generators 23, 24, 26, 27, 28, 29, 31 and 32, thereby providing one of the major advantages of the invention in obviating the need for a wired harness as is known in the prior art (or in some cases at least reducing the complexity and size of any wired harness that may be installed).

The display 34 and antenna 36 also may be wirelessly connected, although it is more likely that these components would be hard-wired in practical embodiments.

The processor 33 is capable of operating the wireless data mesh 21 and assimilating and processing the signals that are transmitted through it. The processor may additionally carry out numerous other functions such as creating display signals and commands based on the signals transmitted via the data mesh 21 and, as desired, updating the status of the data mesh 21.

Processor 33 is in Figure 1 schematically illustrated as a single component, but this is not necessarily the case. On the contrary the processor 33 may be embodied as multiple parts that may be distributed at various locations about the combine harvester or in some cases may be remote from it.

Partly to the last-mentioned end the combine harvester 10 includes aerial 36 by means of which signals generated in the data mesh and/or by the processor 33 may be transmitted externally of the combine harvester 10. The aerial 36 however may also be present even if all the processing of signals and data required is carried out using processors that are carried by the combine harvester 10. In such a case the aerial 10 may be useful e.g. in order to transmit a processed output (such as but not limited to a yield map pf the field in which the combine harvester operates) to an external location such as a farm office, from where it may be copied to the processor of for instance a crop sprayer that is used to dose the field during a subsequent growing season.

The data generators 23, 24, 26, 27, 28, 29, 31, 32, 34 and 36 in Figure 1 are arranged in accordance with a star protocol. In this arrangement each of the data generators 23, 24, 26, 27, 28, 29, 31, 32, 34 and 36 wirelessly communicates directly with the processor 33, as schematically signified by solid connection lines in Figure 1. Communications between the various data generators 23, 24, 26, 27, 28, 29, 31, 32, 34 and 36 and the processor 33 in this arrangement take place by way of a single data *"hop"* each time.

In the star protocol connection of a data mesh those components that are designated as nodes normally are permanently so designated; and those that are not designated as nodes also have a normally unaltering status. In Figure 1 the processor 33 is designated as the sole node, but this need not necessarily be the case. Multiple nodes may if desired be designated, depending on the data transfer requirement.

All of the data generators 23, 24, 26, 27, 28, 29, 31, 32, 34 and 36 require power, especially electrical power, to power their operations. It is also necessary to provide power for the processor 33.

As indicated an advantage of the wireless data mesh 21 is that there is no need for a wiring harness for transmitting data, but this would remain a requirement if it was necessary to provide a wired network for powering the data generators. In beneficial contrast to the prior art however the invention includes a plurality of energy harvesters that are local to the data generators 23, 24, 26, 27, 28, 29, 31, 32, 34 and 36 and provide power for them without a need for a wired power network. The processor 33 also can be powered using an energy harvester; although it is more likely that this component (or series of components, as explained), that typically would be located in the cab 19, would draw power from e.g. a CAN-BUS or similar hard-wired network that notwithstanding the presence of the wireless data mesh 21 also will be present in many embodiments of vehicles to which the invention pertains. Since in many embodiments the display 34 and antenna 36 also are hard-wired and conveniently located in the combine harvester 10 these parts also may draw power from a permanent CAN-BUS or similar wire network as an alternative to powering using energy harvesters.

Thus in Figure 1 the data generators 23, 24, 26, 27, 28, 29, 31 and 32 are powered using energy harvesters, but it is fully possible that other arrangements for powering the data mesh, including different mixtures of local power generators and power networks, may be provided.

Data generators 23, 24, 26, 27, 28 may be classified as operationally important in the sense that their outputs are highly useful for assuring the safe, efficient operation of the combine harvester 10.

For this reason a respective energy harvester 23', 24', 26', 27' and 28' is provided, in a one-to-one correspondence ratio, for each of these data generators.

A data generator such as the internal camera 29 may or may not be designated as operationally important, depending on its precise role and the conditions encountered. In the embodiment of Figure 1 however the camera 29 is located remotely from most if not all of the other elements of the data mesh 21, in a location near the clean grain elevator where it is particularly difficult to provide distributed electrical power. Partly for this reason it is convenient for camera 29 also to be connected to an energy harvester 29' that is connected to it in a one-to-one correspondence ratio.

Sensors 31 and 32 may be designated as non-critical. Partly for this reason they may share an energy harvester 31' that provides electrical power to both sensors 31 and 32 simultaneously, as necessary via any conditioning components ensuring that the power signal delivered to the sensors 31, 32 is appropriate for their requirements. The commonality of the energy harvester 31' to sensors 31 and 32 is signified schematically in Figure 1 through a dotted line connection between these sensors.

The energy harvesters 23', 24', 26', 27', 28' and 31' may take a variety of forms and may differ from one another, depending on the precise requirements. One form of energy harvester includes one or more piezoelectric crystals arranged in a mounting and including terminal connections in a manner permitting the conversion of localised component movements to electrical energy that may be output to power the data generators. Such energy harvesters are potentially of benefit in a vehicle such as combine harvester 10, in which multiple components are powered to move, especially in a reciprocal manner that is suitable for piezoelectric power generation.

However it is not essential that the energy harvesters are of the piezoelectric type; and as indicated other forms are also possible.

The energy harvesters may transfer energy to the devices they power by a variety of means, including wireless (e.g. inductive) or hard-wired arrangements.

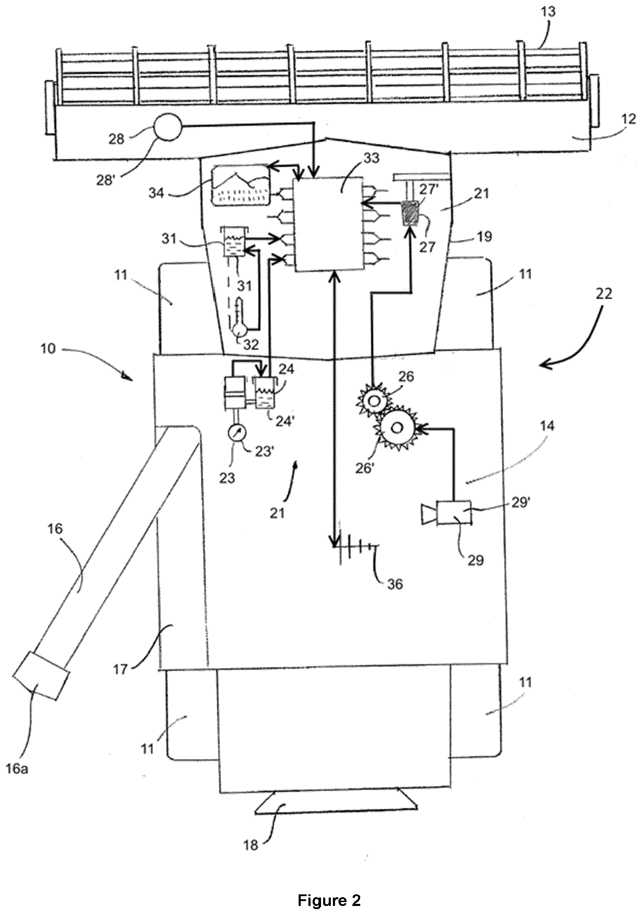

As mentioned it is also possible to configure the data mesh 21 according to a wireless multi-hop topology as illustrated schematically in Figure 2.

In this figure the same components are shown as in Figure 1, and are identified by the same reference numerals. In Figure 2 the same arrangement of energy harvesters is illustrated as in Figure 1, but this need not necessarily be the case even if as shown the precise arrangement of the data generators 23, 24, 26, 27, 28, 29, 31, 32, 34 and 36 is provided.

In Figure 2 however the wireless connection regime differs in that communications in the wireless mesh 21 take place serially from one data generator to another. By this form of connection, which is schematically signified by the solid lines in Figure 2, it requires a series of multiple data transmission *"hops"* for data from most of the data generators to reach the processor 33, that is designated the root node. Such a communication protocol has been shown to demonstrate good robustness in certain conditions, especially when electromagnetic interference (EMI) is likely.

In the multi-hop topology of Figure 2 the individual data generators may self-declare as root nodes. This may be achieved through appropriate programming of programmable parts of the mesh network 21 and in particular the processor 33.

In the example illustrated in Figure 2 a mixture of single-hop and multi-hop wireless connection routes is shown. The sensors 24, 27, 28 and 31, and the display 33 and antenna 36 are designated as local nodes. As a consequence data generated by the sensors 23, 26, 29 and 32 make multiple wireless transmission hops before reaching the root node represented by processor 33.

In particular, with the mesh 21 configured as in Figure 2, data signals generated at camera 29 make three hops before reaching the root node (processor 33); those generated at brake fluid pressure sensor 23, transmission ratio selection sensor 26 and temperature sensor 32 two such hops; and those generated at brake fluid level sensor 24, throttle setting sensor 27, header bar height sensor 28 and screen wash fluid level sensor 31 a single transmission hop. As indicated in Figure 2, the display 34 and antenna 36 also exhibit single hop transmission characteristics but as explained these data generators are likely to be hard-wired and therefore not normally part of the wireless data mesh 21.

The designation of certain data generators as nodes, and the transmission routings (i.e. the multi-hop paths) may be altered dynamically for example as a result of programming of the processor 33 or another part of the combine harvester 10. As a result a different data transmission pattern than that shown in Figure 2 may as necessary be created. This in turn results from the flexibility provided by having data generators that are capable of wireless data transmission and that are associated with local sources of power in the form of the energy harvesters.

Such flexibility moreover permits the conversion of the wireless data mesh 21 between e.g. a star protocol topology as exemplified by Figure 1 and a multi-hop topology as exemplified in Figure 2. As previously explained, the extent to which a particular mesh network 21 adopts a particular type of topology may vary from one instance to another, with mixed multi-hop/star topologies possible. Figure 2 is an example of such a mixed toplogy, with e.g. header bar height sensor 28 communicating in the same way as in Figure 1.

The extent to which the multiple topology types may be mixed may also be controlled in dependence on the programming of programmable elements such as processor 33. The processor 33 may moreover only temporarily be designated a root node, with other elements of the mesh network 21 being from time to time so designated, either as a result of programming of the processor 33 or of so-called *"self-declaration"* of a particular element of the mesh network 21 as a node.

The invention provides considerable flexibility over the manner in which data communications may occur in an unforgiving environment such as that of a vehicle. The ability to employ both a wireless data mesh and locally connected energy harvesters is a particular benefit in this regard.

The listing or discussion of an apparently prior-published document in this specification should not necessarily be taken as an acknowledgement that the document is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

## Claims

1. A vehicle (10) including a wireless data mesh (21) and comprising at least one vehicle frame (22) having distributed at spaced locations on it a plurality of data generators (23, 24, 26, 27, 28, 29, 31, 32) that are wirelessly connected to define the wireless data generator mesh (21), wherein at least one said data generator (23, 24, 26, 27, 28, 29, 31, 32) is a locally powered data generator that is operatively connected to at least one energy harvester (23', 24', 26', 27', 28', 29', 31') that develops power for operation of the data generator.

2. A vehicle (10) according to Claim 1 wherein the at least one locally powered data generator (23, 24, 26, 27, 28, 29, 31, 32) is operatively connected to the at least one energy harvester (23', 24', 26', 27', 28', 29', 31') using a short-range radio frequency (RF) communication or connection protocol.

3. A vehicle (10) according to Claim 2 wherein the short-range RF communication or connection protocol is selected from the list including Bluetooth, Zigbee, Z-Wave, Near Field Communication (NFC), Sigfox, Neul or LoRaWAN.

4. A vehicle (10) according to any preceding claim including a plurality of energy harvesters (23', 24', 26', 27', 28', 29', 31') that correspond in number to the plurality of locally powered data generators (23, 24, 26, 27, 28, 29, 31, 32).

5. A vehicle (10) according to any preceding claim wherein the mesh (21) is provided in a star protocol arrangement.

6. A vehicle (10) according to any of Claims 1 to 4 wherein the mesh (21) is provided as a multi-hop node network.

7. A vehicle (10) according to Claim 6 wherein the nodes of the multi-hop node network are self-declared root nodes.

8. A vehicle (10) according to Claim 7 wherein the self-declared root nodes are temporary root nodes.

9. A vehicle (10) according to any preceding claim when configured as an agricultural, construction or road transport vehicle.

10. A vehicle (10) according to Claim 9 including at least one data generator selected from the list including a crop moisture sensor, a crop mass sensor, a header bar setting sensor, a vehicle speed sensor, a vehicle direction sensor, a vehicle transmission ratio sensor, a vehicle throttle setting sensor, a vehicle brake system status sensor, an engine or motor fault sensor, a fuel level sensor, a battery charge sensor, a vehicle auxiliary fluid level sensor, a vehicle exhaust analysis sensor, an inclinometer, a vehicle position sensor, a vehicle sub-system status sensor, a proximity sensor, a vehicle guidance system, a processor, a data transmitter, a data receiver, a data transceiver, a memory device, a visual indicator, an audio indicator, a printer, a plotter, a mimic, a camera or a display.
